(19) Europäisches Patentamt / European Patent Office / Office européen des brevets

(11) **EP 2 557 451 B1**

(12) **EUROPÄISCHE PATENTSCHRIFT**

(45) Veröffentlichungstag und Bekanntmachung des Hinweises auf die Patenterteilung:
**21.03.2018 Patentblatt 2018/12**

(51) Int Cl.:
*G02B 27/60* *(2006.01)*     *G02B 27/58* *(2006.01)*
*G02B 21/00* *(2006.01)*

(21) Anmeldenummer: **12006411.8**

(22) Anmeldetag: **26.09.2008**

(54) **VERFAHREN UND ANORDNUNG ZUR OPTISCHEN ERFASSUNG EINER BELEUCHTETEN PROBE**

METHOD AND ASSEMBLY FOR THE OPTICAL RECORDING OF AN ILLUMINATED SAMPLE

PROCÉDÉ ET DISPOSITIF POUR LA DÉTECTION OPTIQUE D'UN ÉCHANTILLON ÉCLAIRÉ

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **28.09.2007 DE 102007047468**

(43) Veröffentlichungstag der Anmeldung:
**13.02.2013 Patentblatt 2013/07**

(62) Dokumentnummer(n) der früheren Anmeldung(en) nach Art. 76 EPÜ:
**08802655.4 / 2 212 739**

(73) Patentinhaber: **Carl Zeiss Microscopy GmbH 07745 Jena (DE)**

(72) Erfinder:
• **Kempe, Michael**
**07751 Jena (DE)**
• **Schwertner, Michael**
**SM7 2NS Banstead (Surrey) (GB)**
• **Wolleschensky, Ralf**
**07743 Jena (DE)**

(56) Entgegenhaltungen:
EP-A- 0 353 495     EP-A- 1 936 422
WO-A-00/43819     WO-A1-2007/009812
DE-A1- 10 118 463     DE-A1- 10 155 002
US-A1- 2007 206 276

• NEIL M A A ET AL: "METHOD OF OBTAINING OPTICAL SECTIONING BY USING STRUCTURED LIGHT IN A CONVENTIONAL MICROSCOPE", OPTICS LETTERS, OSA, OPTICAL SOCIETY OF AMERICA, WASHINGTON, DC, US, Bd. 22, Nr. 24, 15. Dezember 1997 (1997-12-15), Seiten 1805-1807, XP000733996, ISSN: 0146-9592

**Beschreibung**

Strukturierte Beleuchtung wird in der Mikroskopie zur Tiefendiskriminierung im Weitfeld [1] und zur Auflösungs- und Kontraststeigerung [2] eingesetzt. Im Allgemeinen wird dabei ein Gitter oder eine periodische Struktur in die Probe projiziert [3] oder durch Interferenz kohärenter Teilstrahlen ein Interferenzmuster in der Probe erzeugt [4]. Durch Verschiebung der Beleuchtungsstruktur werden voneinander verschiedene Bilder mit unterschiedlicher Phasenlage der periodischen Struktur erzeugt. Diese werden anschließend in geeigneter Weise miteinander verrechnet, um ein optisches Schnittbild bzw. ein Bild mit erhöhtem Kontrast und erhöhter Auflösung zu gewinnen. Nachteilig wirkt sich dabei aus, dass Signal von außerfokalen Bereichen der Probe mit detektiert wird und durch den limitierten Dynamikbereich des Detektors zu einem verringerten Signal-zu-Rausch-Verhältnis führt. Die Stärke des außerfokalen Signals begrenzt, dabei die nutzbare Probendicke. Das ist besonders dann von erheblicher Bedeutung, wenn die Frequenz der Strukturierung sich der beugungsbegrenzten Grenzfrequenz des optischen Systems nähert und der Kontrast der Strukturierung daher prinzipbedingt niedrig ist. Das ist immer dann der Fall, wenn eine Kontrast- und Auflösungssteigerung erzielt werden soll.

Eine Lösung dieses Problems besteht in der teilweise konfokalen Detektion, die durch die Strukturierung einer Beleuchtungslinie und der Detektion des dadurch angeregten Fluoreszenzlichts mit einem Spaltdetektor möglich wird [5]. Dieses Verfahren hat allerdings Nachteile. Die Strukturierung erfolgt nur entlang der Linie. Als Folge davon bleiben die Effekte der Kontrast- und Auflösungssteigerung auf diese Richtung beschränkt. Insbesondere bei nichtlinearer [6], aber auch bei linearer Strukturierung [7] ist damit die Diskrepanz zwischen der einen Richtung mit Auflösungssteigerung und allen anderen Raumrichtungen signifikant. Das Scannen der Linie in einer beliebigen Richtung in der Probenebene und auch die Einstellung der Phasenlage der periodischen Struktur ist notwendig. Entsprechend dem Stand der Technik werden hierzu separate Aktuatoren für die Ansteuerung der Relativen Phasenlage und den Scanvorgang benötigt.

Aus dem Stand der Technik sind Anordnungen zur Erzeugung eines Bildkontrasts (EP 0 353 495 A2) sowie konfokale Mikroskope und Verfahren zum Betreiben solcher Mikroskop (WO 00/43819, US 2007/0206276 A1, WO 2007/009812 und DE 101 18 463 A1) bekannt.

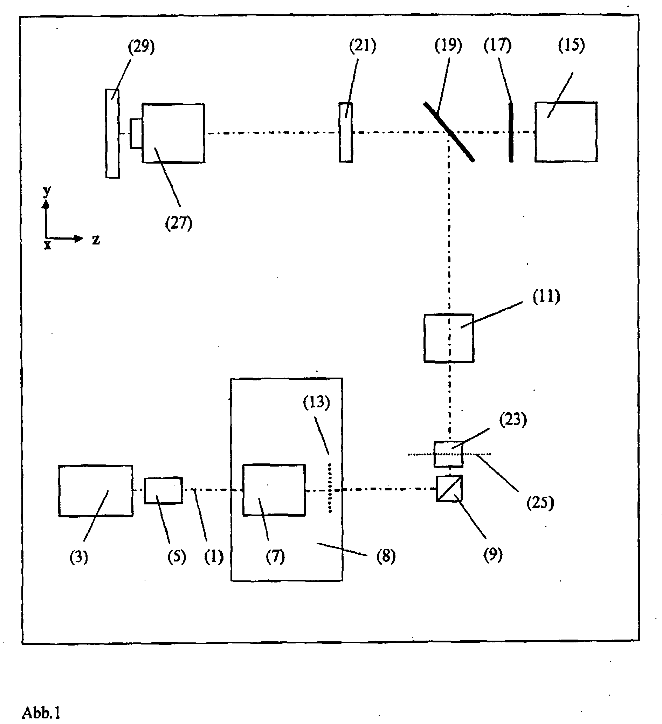

Die vorliegende Erfindung hat das Ziel, die Nachteile des Standes der Technik zu überwinden. Dieses Ziel wird durch das Verfahren gemäß Anspruch 1 und die Anordnung gemäß Anspruch 10 erreicht. Als Vergleichsbeispiel werden die Vorteile der strukturierten Beleuchtung im Weitfeld (wenige optische Komponenten, hohe Parallelisierung) mit denen der strukturierten Beleuchtung entlang einer Linie (teilkonfokale Unterdrückung des Untergrundsignals für maximalen Kontrast, hohe Intensitäten im Fokus für nichtlineare und lineare Probenwechselwirkungen) zu verbinden. Die vorgeschlagene Anordnung gestattet eine schnelle, variable und präzise Rotation der Scanrichtung und eine Einstellung der relativen Phasenlage der abgebildeten strukturierten periodischen Struktur mit Hilfe von nur zwei Scannern. Zusätzlich wird eine variabel einstellbare konfokale Detektion bei gleichzeitig nur sehr geringen Lichtverlusten im Detektionsstrahlengang ermöglicht. Es wird auch auf DE10155002A1 verwiesen. Ein anderes Vergleichsbeispiel ist ein linienscannendes Mikroskop (siehe Abb.1) welches im Detektionsstrahlengang im Vergleich zu einem Weitfeldsystem ebenso wenig Komponenten enthält. Konkret sind dies ein für einen unendlichen Strahlengang korrigiertes Objektiv (27), die Tubuslinse (21), der Hauptfarbteiler (19), ein Emissionsfilter (17) und die Kamera (15). Im Anregungsstrahlengang befindet sich die Strahlformungseinheit (8), die den durch den Modulator (5) intensitätsmodulierten Lichtstrahl der Lichtquelle (3) zu einer Linie formt, welche entlang der Linienausdehnung moduliert ist. In dem in Abbildung 1 dargestellten Ausführungsbeispiel ist die Strahlformungseinheit durch eine Kombination aus Linienformungsoptik (7) und einer periodische Struktur (13) zusammengesetzt, wobei (7) und (13) zu einer mechanischen Gruppe (8) zusammengefasst sind, welche um die optische Achse (1) rotiert werden kann. Die Rotation der Strahlformungseinheit (8), welche vorzugsweise durch einen schnellen Schrittmotor realisiert ist, kann die Orientierung der in die Probe abgebildeten Linie in der x/y Ebene eingestellt werden. In einem weiteren Vergleichsbeispiel (nicht in Abb. 1 dargestellt) kann die Strahlformungseinheit (8) auch durch ein einziges diffraktives optisches Element implementiert sein, welches ebenfalls um die optische Achse (1) rotiert werden kann. Ein solches diffraktives Element kann Linienformung in einer Richtung und Linienstrukturierung in einer dazu orthogonalen Richtung in einem Schritt durchführen.

Im weiteren Verlauf der optischen Achse befinden sich ein erster Scanner (9), ein weiterer, zum ersten Scanner (9) orthogonal stehender Scanner (23) und ein Scanobjektiv (11). Die Rotationsachse oder Schwenkachse (25) des Scanners (23) ist zur Rotationsachse des ersten Scanners (9) im Wesentlichen orthogonal angeordnet. Hierbei wird Scanner (9) für eine Verschiebung der Linie in der Probe in x-Richtung und Scanner (23) für eine Verschiebung der Linie in y-Richtung verwendet.

Beide Scanner (9) und (23) befinden sich in der Nähe der konjugierten Pupillenebene.

Abb.1 zeigt den schematischen Aufbau des Mikroskops

(1) ist die Optische Achse, (3) die Lichtquelle, (5) ein Schaltbarer Attenuator / AOM. (8) eine Strahlformungseinheit mit einer (7) Linienformungsoptik, beispielsweise einer Zylinderlinse, (9) ein Scanner mit einer Rotationsachse senkrecht zur Zeichenebene, (23) ein Scanner mit einer Rotationsachse (25) im wesentlichen parallel zur Zeichenebene, (11) eine Scanoptik, (13) eine Maske mit periodischer Struktur in der einer zur Probe konjugierten Zwischenbildebene, (15) ein ortsauflösender Flächensensor wie z.B. eine CCD-Empfängermatrix, (17) ein Emissionsfilter, (19) ein Hauptfarbteiler, (21) eine Tubuslinse, (27) ein Mikroskopobjektiv. (29) die Probe. Die Elemente (7) und (13) sind zu einer mechanischen Gruppe, der Strahlformungseinheit (8) zusammengefasst, welche vorzugsweise um die optische Achse (1) rotierbar angeordnet ist.

Im Folgenden soll die Verschiebung der Phase der strukturierten Linie sowie des Abscannens des Bildfeldes durch die Zusammenwirkung der beiden Scanner (9) und (23) mit dem AOM (5) beschrieben werden.

Ohne Einschränkung der Allgemeinheit soll im Folgenden ein Beispiel betrachtet werden, bei dem die Linie in der Probe entlang der x-Richtung ausgerichtet ist und das Abscannen des Bildfeldes in der dazu senkrechten y-Richtung stattfindet. Dies erfordert auch die entsprechende Orientierung der Strahlformungseinheit (8) um eine Orientierung der Linie in x-Richtung zu erzeugen.

Die Funktion des Scanners (23) besteht bei dieser Linienorientierung darin, die Phasenlage der Strukturierung zwischen zwei und mehr aufgenommenen Bildern zu verändern, wobei der Scanner (9) für den Scanvorgang in y-Richtung verantwortlich it.

Aus den aufgenommenen Bildern bei jeweils unterschiedlicher Phasenlage ("Phasenbitdem") erfolgt die Berechnung (Rekonstruktion) eines Schnittbildes. Auf DE10155002A1 wird verwiesen.

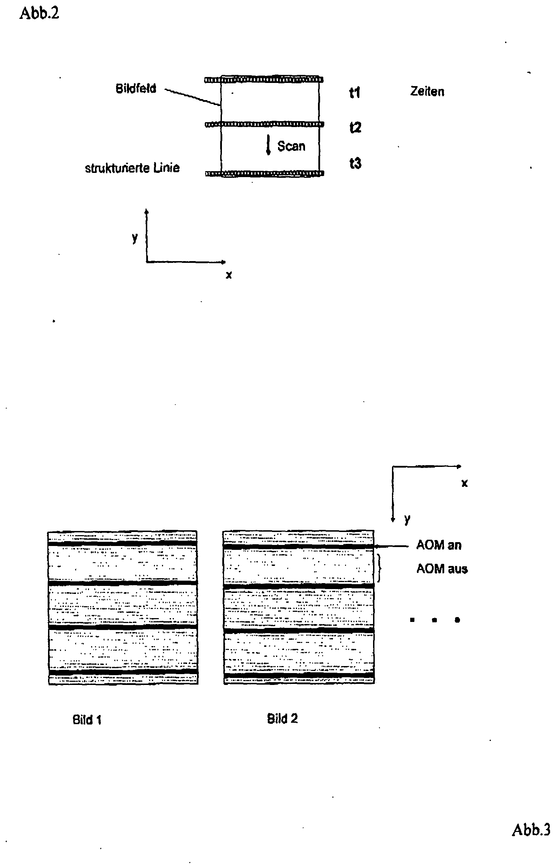

Abb. 2 zeigt die Strukturierung der Beleuchtung

Wenn während eines linearen Scans des Scanners (9) Ober eine Zeit Δt=t3-t1 die Kamera synchron ein Bild mit einer Belichtungszeit von mindestens Δt einzieht, erhält man ein einem Weitfeldbild des Objektes äquivalentes Resultat. Dabei wird der außerfokale Untergrund ebenfalls mit detektiert. Eine konfokale Filterung wird erfindungsgemäß möglich, wenn durch den Modulator (5) synchron zum Scanvorgang bei der Aufnahme jedes Phasenbildes das zur Berechnung eines Schnittbildes gehört, in y-Richtung die Beleuchtung in gleicher Weise periodisch an- und ausgeschaltet wird.

Hierbei kann der Scanner neben der kontinuierlichen Scanbewegung mit Ein- und Ausschalten vorteilhaft auch in den ausgeschalteten Abschnitten schnell zur nächsten Position mit angeschalteter Beleuchtung bewegt werden, in der der beleuchtete Scanvorgang fortgesetzt wird. Die Bewegung könnte auch wie mit einem Schrittmotor schrittartig erfolgen.

In dem nicht zur Erfindung gehörenden Verfahren ergibt sich eine in y-Richtung strukturierte Belichtung in der Kameraebene (siehe Abb. 3). Die Abstände zwischen den belichteten Zeilen der Kamera werden in einem Vergleichsbeispiel so gewählt, dass in Übersprechen des außerfokalen Untergrundes bei der Beleuchtung einer Linie auf der Probe in die Region auf der Kamera , die der Beleuchtung der nächsten Linie in der Probe entspricht, minimiert wird. Bei Abtastung des Objektes nach dem Nyquist-Theorem (eine Detektorzeile entspricht der halben Breite der beugungsbegrenzten Linie) sollten empirisch M = 5 bis 10 Zeilen Abstand zwischen benachbarten Belichtungszeilen ausreichen. Im nächsten von der Kamera erfassten Bild wird dann das belichtete Zeilenmuster um vorzugsweise eine Zeile verschoben, was durch eine entsprechende Verzögerung beim Anschalten des Modulators erzielt wird. Es wird also beispielsweise zunächst die 1., 10., 20. Zeile, dann die 2., 11. und 21. Zeile belichtet.

Dieser Prozess der zeilenweisen Verschiebung der Objektbeleuchtung wird solange wiederholt, bis alle Abschnitte der Probe im Bildfeld abgetastet sind, wobei als Resultat dieses Aufnahmevorganges M Bilder pro Phasenlage vorliegen.

Alternativ könnte für eine Abstandseinstellung zwischen belichteten Zeilen zunächst die Aufnahme bei mehreren Phasenlagen der periodischen Struktur erfolgen und dann der Abstand für die Aufnahme wiederum mehrerer Phasenbilder verändert werden.

Jedes dieser Bilder kann wiederum zusätzlich zur schon beschriebenen Verfahrensweise durch wiederholte Aufnahme, vorzugsweise mit möglichst geringer Intensität zur Probenschonung, mit gleichen Scanner-Einstellungen und anschließender Mittelung entstanden sein. Dieses Verfahren kann Artefakte aufgrund von Bleichvorgängen in der Probe reduzieren. Über die Verrechnung der M Bilder pro Phasenlage kann nun die Konfokalität eingestellt werden.

Insbesondere muss für die einzelnen Bilder der durch den Empfänger erfasste belichtete Untergrund zwischen den belichteten Empfängerzeilen herausgerechnet werden. Dieser ist auf dem Empfänger leicht zu identifizieren, da die belichteten Zeilen im Objekt eindeutig voneinander separierten Bereichen auf der Kamera zuzuordnen sind.

Wenn alle M Bilder einer Phasenlage einfach aufsummiert werden, erhält man ein dem Weitfeldbild entsprechendes Ergebnis. Die Aufsummierung der Bilder nach Selektion der Zeilen, die den entsprechenden beleuchteten Zeilen im Fokus des Objektes entsprechen, ergibt ein konfokales Bild. In diesem Schritt werden die zu den selektierten Zeilen benachbarten Bildbereiche wie beschrieben maskiert und nicht ausgewertet. Dies entspricht der Funktion einer virtuellen Spaltblende, da die nicht genutzten, maskierten Bildbereiche den Detektionsorten des außerfokalen Streulichtes entsprechen. Die Konfokalität kann dabei von 1 Airy Unit (2 Zeilen selektiert) bis M Airy-Units variiert werden (virtuelle Spaltblende).

Abb. 3 zeigt Belichtungsmuster auf der Kamera für konfokale Detektion bei ein- und ausgeschaltetem Modulator (AOM).

Die Geschwindigkeit der Bildaufnahme wird dabei im Vergleich zur nichtkonfokalen Detektion um den Faktor M verringert. Wenn man einen Bildeinzug von 50 Bildem/s zugrunde legt, kann man bei M=5 ein vollständiges Bild (bei einer Phasenlage der Strukturierung) in 100 ms erhalten. Allerdings ist zu berücksichtigen, dass pro Strukturierungsrichtung N= 3 bis 5 Bilder mit verschiedenen Phasenlagen aufgenommen werden müssen. Im linearen Strukturierungsfall mit 3 Strukturierungsrichtungen ergeben sich daher typischerweise 9 Bilder [7], was bei M=5 zu einer Bildaufnahmezeit von ca. 1 s pro Ebene führt.

Eine etwas günstigere Situation ergibt sich, wenn Scanner (9) nicht gleichförmig (mit Geschwindigkeit $v_s$) über das Bildfeld scannt, sondern sich in den Zeiten mit ausgeschaltetem Laser mit Maximalgeschwindigkeit $v_{max}$ bewegt, Das stellt zwar höhere Anforderungen an die Steuerung und Synchronität der Scanner, erhöht die Bildaufnahmezeit aber um den Faktor

$$sf = \frac{M}{(M-1)\frac{v_s}{v_{max}} + 1}$$

d.h. ungefähr um das M-fache (wenn $v_{max} >> v_1$) bzw. bis zur maximalen Bildaufnahmerate der Kamera.

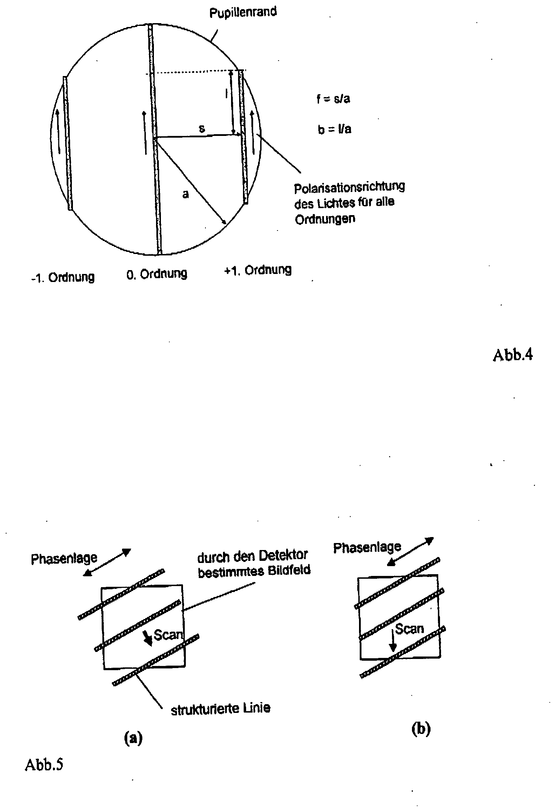

Bei der linienförmigen, strukturierten Beleuchtung ist zu beachten, dass mit zunehmender Strukturierungsfrequenz die Länge der durch die zirkulare Pupille transmittierten höheren Ordnungen kleiner wird (siehe Abb. 4). Dies bedeutet, dass der Kontrast einer Interferenz mit der 0. Ordnung beleuchtungsseitig kleiner wird. Der Kontrast der Interferenz zwischen den höheren Ordnungen ist allerdings bei symetrischen Durchgang durch die Pupille unverändert 100%. Ferner wird die Breite der beugungsbegrenzten Linie im Bild größer. Bei einer auf die Grenzfrequenz normierten Strukturierungsfrequenz von f ergibt sich eine Verbreiterung b (Linienbreite geteilt durch minimale Breite bei voller NA) von

$$b = \left(2\sqrt{1-f^2}\right)^{-1}.$$

Für eine typische Strukturierungsfrequenz von 90% der Grenzfrequenz (f=0.9) ergibt sich eine Verbreiterung von 15%. Bei 95% der Grenzfrequenz steigt diese bereits auf 60% an.

Dieser Verbreiterung hat keinen Einfluß auf die Auflösung, die durch die Strukturierungsfrequenz und die Übertragungsfunktion des Objektivs bestimmt wird, wohl aber auf die Unterdrückung außerfokalen Untergrunds und muss für die konfokale Filterung berücksichtigt werden.

den.

Abb. 4 zeigt Ordnungen der strukturierten Linienbeleuchtung in der Pupille (Fouriertransformation einer strukturierten Linienverteilung).

Durch die interferierenden ersten Beugungsordnungen wird auf der Probe eine strukturierte Linie erzeugt. Der Abstand der Beugungsordnungen ist s ,a ist die Pupillengröße. Das Verhältnis von s und b ist die auf die Grenzfrequenz normierten Strukturierungsfrequenz f.

Die in Abb. 3 dargestellten Linien parallel zur x-Richtung repräsentieren nur eine Strukturierungsrichtung. Die Orientierung der Linien auf der Kamera kann durch Rotation der Einheit (8) (Abb. 1) eingestellt werden. Die Verschiebungsrichtung und Phasenlage der periodischen Struktur wir mittels der Scanner (9) und (23) eingestellt.

Der allgemeine Fall mit einer beliebigen Linienorientierung wird in Abbildung 5 veranschaulicht.

Abb. 5 dient zur Erläuterung der Einstellung von Scanrichtung und Phasenlage durch die Scanner bei synchroner Scannerbewegung (a) und bei Scannen mit einem Scanner (b).

Die Phasenlage (Doppelpfeil) der projizierten Struktur wird dabei durch den relativen, konstanten Offset der beiden Scanner (9) und (23) während des Scanvorgangs bestimmt, während die vorzugsweise dazu senkrechte Scan-Richtung (Pfeil) durch die relative Geschwindigkeit der beiden Scanner festgelegt ist. Es ist aber auch möglich, das Abscannen der Probe nur mit Scanner (9) durchzuführen. Dies vereinfacht die Systemsteuerung. Abhängig vom Scanmodus ist sicherzustellen, dass das im Allgemeinen vom Detektor bestimmte Bildfeld auch bei rotierter Linie möglichst homogen ausgeleuchtet wird.

In der bisher beschriebenen Anordnung wird die Formung der in die Probe projizierten Struktur durch die Strahlformungseinheit (8) gewährleistet. Die Einheit (8) kann aus der Kombination einer Linienformungsoptik (7) mit einer periodischen Struktur (13) bestehen. Dabei kann die Linienformungsoptik eine Powell-Linse enthalten. Die periodische Struktur kann eine Phasenstruktur, eine Amplitudenstruktur oder eine Kombination aus beidem darstellen. Weiterhin kann die gesamte Strahlformungseinheit (8) durch ein diffraktiv-optisches Element ersetzt werden (siehe auch DE10155002A1). Dieses Element kann auf der Probe eine oder mehrere strukturierte Linien im Mindestabstand M er-Zeugen um die Zahl der Verschiebungen zu reduzieren.

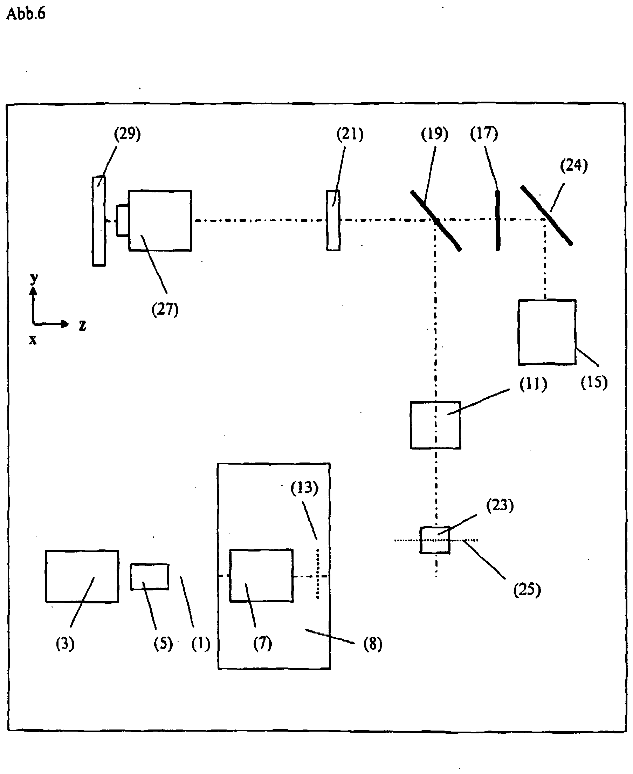

Ein potentielles Problem der sequentiellen Abtastung der Probe mit M Zeilenmustern entsteht durch Probenbewegung während der Bildaufnahmezeit. Dies ist ein grundsätzliches Problem der Verfahren zur strukturierten Beleuchtung und sollte durch minimale Bildaufnahmezeiten so klein wie möglich gehalten werden. Daher kommt der empfindlichen Detektion mit minimalen Fluoreszenzverlusten zwischen Objekt und Detektor hohe Bedeutung zu. Eine erfindungsgemäße Alternative zur sequentiellen Abtastung mit M Zeilenmustern, die es ermöglicht, anstelle der M Zeilenbilder ein einziges Bild einzuziehen und dennoch konfokale Detektion zu ermöglichen, soll im folgenden beschrieben werden. Dabei macht man sich die Tatsache zunutze, dass beim Linienscanner das Objekt sequentiell zeilenweise abgetastet wird. Das ermöglicht, im Detektionsstrahlengang durch ein weiteres Element eine diskrete, zeilenweise Ablenkung des Detektionslichts zu realisieren, so dass auf dem Detektor ein Zeilenmuster wie in Abb. 3 entsteht, obwohl das Objekt ohne Zwischenräume abgescannt wird. Um ein gesamtes Bild derart auf dem Detektor abzubilden ist die Voraussetzung, dass dieser M mehr Zeilen hat als für das Bild erforderlich. Ein typischer Wert sind 500 Zeilen pro Bild. Mit M = 5 ergibt sich eine erforderliche Detektorenzeilenzahl von 2500. Als Element zur Zeilenablenkung könnte z.B. eine Galvoscanner vor dem Detektor zur Anwendung kommen (siehe Abb. 6, Scanner (24)). Wenn die Pixelgröße auf der Kamera 5 $\mu$m beträgt, so ergibt sich der maximale Ablenkungswinkel so, dass in dem oben aufgeführten Beispiel auf der Kamera ein Versatz von (2500-500)>×5$\mu$m = 10 mm entsteht. Dies entspricht bei einem Abstand der Kamera zum Scanner von 50 mm einem Scanwinkel von 5 Grad (für eine Ablenkung von 10 Grad). Um die im Objekt abgetastete Zeile nicht über die Zwischenräume zwischen den Zeilen zu verschmieren ist ein Ausschalten der Belichtung (z.B. durch den AOM bzw. AOTF) während der diskreten Ablenkung von Scanner {24) zweckmäßig. Es ist aber auch denkbar, eine kontinuierliche Belichtung zu realisieren. Da die Scangeschwindigkeit von Scanner (24) sehr hoch im Vergleich zu der des Scanners (9) sein muß, kann man die Belichtung während der Bewegung des Scanners {24) vernachlässigen.

Beispielsweise erzeugt der Scanner (24) mit derselben Ablenkachse wie der Scanner (9), der wie oben beschrieben für die Ablenkung in Y Richtung verantwortlich ist, beispielsweise 10 versetzte diskrete Scansprünge innerhalb einer Zeilenposition der sequentiellen Zeilenabtastung des Scanners (9), bevor dieser in die nächste detektierte Zeilenposition vorrückt. Der Scanner (9) kann dabei auch kontinuierlich scannen, während Scanner (24) immer diskret, mit einer hohen Ablenkgeschwindigkeit betrieben werden muß. Die Zeit $t_i$ zwischen den Scansprüngen mit einer Zeit $t_d$ entspricht dabei der effektiven Zeilenintegrationszeit auf der Kamera. Es muß mindestes M $t_d$ < $t_i$ gelten. Diese Scansprünge erzeugen auf dem Flächendetektor voneinander beabstandete Signale der beleuchteten Probe, die sinngemäß den voneinander beabstandeten Bereichen des Detektors entsprechen wie sie anhand insbesondere Abb.3 weiter oben ausführlich erläutert wurden.

Abb.6 zeigt den schematischen Aufbau des Mikroskops mit alternativer Detektion und einem zusätzlichen Galvo-Scanner (24) mit einer Rotationsachse senkrecht zur Zeichenebene

Um eine strukturierte Beleuchtung mit möglichst hohem Kontrast der Strukturierung in der Objektebene zu erhalten ist bei der Verwendung von Optiken mit höheren numerischen Aperturen, wie sie in der Mikroskopie üblich sind, die Polarisation zu beachten. Ein maximaler Kontrast ist nur dann möglich, wenn die Polarisation des Beleuchtungslichtes senkrecht zur Verbindungslinie der Beugungsordnungen in der Pupillenebene (d.h. senkrecht zur Lage der Linie in einer Bildebene) steht, wie in Abb. 4 dargestellt. Die entsprechende Polarisation des Beleuchtungslichtes muss daher synchron mit der Rotation der Strahlformungseinheit (8) zur Rotation der Blende mitgedreht werden. Ersteres kann bevorzugt durch die Rotation einer λ/2-Platte im Strahlengang des linear polarisierten Anregungslichts erzeugt werden, wobei der Rotationswinkel der Wellenplatte halb so groß wie die der Strahlformungseinheit ist. Entsprechend ist eine rotierbare Wellenplatte im

Strahlengang von Abb. 1 und 6 zwischen Quelle (3) und Hauptfarbteiler (19) vorzusehen. Alternativ kann die Strahlformungseinheit auch mit einem Polarisator versehen werden, der nur korrekt orientiertes, linear polarisiertes Licht transmittiert. Dies hat einen rotationsabhängigen Lichtverlust zur Folge, siehe Abb. 7, der durch eine geeignet synchronisierte Lichtmodulation kompensiert werden kann.

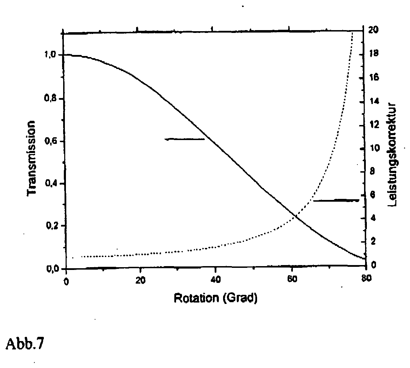

Abb. 7 zeigt den Uchtverlust durch Rotation eines Polarisators zusammen mit der Strahlformungseinheit (8) und Kompensation des Verlusts durch Leistungsanpassung

Die Erfindung ist nicht nur an die beschriebenen Ausführungen gebunden.
Im fachmännischen Rahmen können Modifikationen und Veränderungen von den erfinderischen Gedanken erfasst sein,
Beispielsweise ist die Erfindung sinngemäß auf andere Beleuchtungsverteilungen wie Multipunktanordnungen (US 6028306) und anderen Punktanordnungen, auch Nipkowscheiben und bei Detektion im Weitfeld anwendbar.

Literatur:

[1] Neil M.A.A., Juskaitis R., Wilson T.: "Method of obtaining optical sectioning by using structured light in a conventional microscope", Opt.Lett. 22 (24): 1905-1907, 1997
[2] Lukosz W., Marchand M., "Optische Auflösung unter Überschreitung der beugungsbedingten Auflösungsgrenze", Optica Acta 16, 241-255, 1963

[3] Heintzmann R., Cremer C.,"Laterally modulated excitation microscopy: improvement of resolution by using a diffraction grating", in Proc. of SPIE 3568: 185-196, 1998
[4] Neil M.A.A., Juskaitis, A., Wilson, T., "Real time 3D fluorescence microscopy by two beam interference Illumination", Opt. Comm. 153: 1-4, 1998
[5] US Patent 6,947,127 B2, 2005
[6] Heintzmann R., Jovin T.M., Cremer C., "Saturated pattemed excitation microscopy - a concept for optical resolution improvement" JOSA A, 19 (8): 1599-1609, 2002
[7] Gustafsson, M.G.L., Agard, D.A., Sedat, J.W., "Doubling the lateral resolution of wide-field fluorescence microscopy by structured illumination", in Proc. of SPIE 3919: 141-150, 2000
[8] Gustafsson M.G.L. "Nonlinear structured-illumination microscopy: wide-field fluorescence imaging with theoretically unlimited resolution", PNAS 102: 13081-13086, 2005

**Patentansprüche**

1. Verfahren zur tiefenaufgelösten optischen Erfassung einer Probe (29), bei dem eine Probe (29) oder ein Teil davon mittels linienförmiger Beleuchtung abgetastet wird,

   - die Beleuchtung der Probe (29) im Fokus in mindestens einer Raumrichtung periodisch strukturiert wird,
   - von der Probe (29) kommendes Licht detektiert und Bilder der Probe (29) erzeugt werden,
   - und aus den Bildern mindestens ein optisches Schnittbild und/ oder ein Bild mit erhöhter Auflösung berechnet wird,
   - **dadurch gekennzeichnet, dass** während eines Scanvorgangs in einem Detektionsstrahlengang vor dem Detektor (15) eine diskrete zeilenweise Ablenkung des Detektionslichtes in Richtung der Abtastung der Probe (29) durch eine Linie der linienförmigen Beleuchtung realisiert wird, so dass auf dem Detektor (15) ein Zeilenmuster mit Zwischenräumen entsteht, obwohl die Probe (29) ohne Zwischenräume sequentiell zeilenweise abgescannt wird.

2. Verfahren nach Anspruch 1, wobei die Geschwindigkeit der Ablenkung des Detektionslichtes größer als die Geschwindigkeit der Relativbewegung zwischen Probe (29) und Beleuchtungslicht ist.

3. Verfahren nach einem der Ansprüche 1 oder 2, wobei die Ablenkung des Detektionslichtes schrittweise erfolgt.

4. Verfahren nach einem der vorangehenden Ansprüche,
wobei bei einer Drehung der Beleuchtungslinie die Polarisation des Beleuchtungslichtes synchron mit der Rotation gedreht wird.

5. Verfahren nach einem der vorangehenden Ansprüche,
wobei eine Lichtunterbrechung durch Verringerung der Intensität durch einen elektrooptischen und/ oder akustooptischen Modulator (5) erfolgt.

6. Verfahren nach einem der vorangehenden Ansprüche,
wobei zur periodischen Strukturierung der Beleuchtung ein Lichtstrahl in mehrere Teillichtstrahlen zerlegt wird, diese interferometrisch überlagert und zu einer Linie geformt werden.

7. Verfahren nach einem der vorangehenden Ansprüche,
wobei das aus einer nichtlinearen Wechselwirkung der Beleuchtung mit der Probe (29) oder eines Teils der Probe (29) resultierende Licht detektiert wird.

8. Verfahren nach einem der vorgenannten Ansprüche, **dadurch gekennzeichnet, dass** die optische Schnittdicke oder optische Auflösung variiert wird, indem Strukturen mit verschiedenen Modulationsfrequenzen abgebildet werden.

9. Verfahren nach einem der vorgenannten Ansprüche, **dadurch gekennzeichnet, dass** bei Beleuchtung mit mehreren Wellenlängen die Schnittdicke durch eine Anpassung der jeweiligen Modulationsfrequenz gleich eingestellt wird.

10. Anordnung zur tiefenaufgelösten optischen Erfassung einer Probe (29), umfassend

    - Mittel zur linienförmigen Beleuchtung der Probe (29) mit mindestens einer Wellenlänge,
    - Mittel zur räumlichen Strukturierung des Beleuchtungslichtes in mindestens einer Ebene,
    - Mittel zur Erzeugung einer Relativbewegung zwischen Probe (29) und Beleuchtungslicht,
    - Mittel zur Abbildung des von der Probe (29) beeinflussten Lichtes auf mindestens einen Detektor (15), sowie
    - Mittel zur Berechnung mindestens eines optischen Schnittbildes und/ oder eines Bildes mit erhöhter Auflösung aus der Ortsinformation des von der Probe (29) beeinflussten Lichts,
    **dadurch gekennzeichnet, dass** ein Scanner (24) im Detektionsstrahlengang zur diskreten zeilenweisen Ablenkung des Detektionslichts vorgesehen ist, so dass auf dem Detektor (15) ein Zeilenmuster mit Zwischenräumen entsteht obwohl die Probe (29) sequentiell zeilenweise ohne Zwischenräume abgescannt wird und der Detektor (15) mehr Zeilen hat als für das Bild erforderlich sind.

**11.** Anordnung nach Anspruch 10, **dadurch gekennzeichnet, dass** als Mittel zur Erzeugung der Relativbewegung mindestens ein Scanner (9, 23) vorgesehen ist.

**12.** Anordnung nach einem der Ansprüche 10 oder 11, **dadurch gekennzeichnet, dass** als Mittel zur Strukturierung der Beleuchtung ein vorzugsweise um die optische Achse (1) drehbares, bezüglich seiner Transparenz strukturiertes optisches Element (18) vorgesehen ist.

**13.** Anordnung nach einem der Ansprüche 10 - 12, **dadurch gekennzeichnet, dass** zur Einstellung verschiedener Frequenzstrukturen in den Strahlengang einschwenkbare Gitter verschiedener Periodizität vorgesehen sind.

**14.** Mikroskop umfassend eine Anordnung nach einem der Ansprüche 10 bis 13.

**Claims**

**1.** Method for the depth-resolved optical detection of a sample (29), in which a sample (29) or a part thereof is scanned by means of linear illumination,

> - the illumination of the sample (29) is periodically structured in focus in at least one spatial direction,
> - light coming from the sample (29) is detected and images of the sample (29) are generated,
> - and at least one optical section image and/or an image of increased resolution is calculated from the images,
> - **characterized in that**, during a scanning process, a discrete linewise deflection of the detection light is carried out in a detection beam path upstream of the detector (15) in the direction of the scanning of the sample (29) by a line of the linear illumination, such that a line pattern with interspaces arises on the detector (15) even though the sample (29) is scanned sequentially, line-by-line, without interspaces.

**2.** Method according to Claim 1, in which the speed of the deflection of the detection light is greater than the speed of the relative movement between sample (29) and illumination light.

**3.** Method according to either of Claims 1 and 2, in which the detection light is deflected in a stepwise manner.

**4.** Method according to one of the preceding claims, in which during a rotation of the illumination line the polarization of the illumination light is rotated synchronously with the rotation.

**5.** Method according to one of the preceding claims, in which light is interrupted by reducing the intensity with the aid of an electro-optic and/or acousto-optic modulator (5).

**6.** Method according to one of the preceding claims, in which to periodically structure the illumination a light beam is split into a plurality of partial beams which are superimposed interferometrically and shaped into a line.

**7.** Method according to one of the preceding claims, in which the light resulting from a non-linear interaction of the illumination with the sample (29) or a part of the sample (29) is detected.

**8.** Method according to one of the preceding claims, **characterized in that** the optical section thickness or optical resolution is varied by imaging structures with various modulation frequencies.

**9.** Method according to one of the preceding claims, **characterized in that**, during illumination with a plurality of wavelengths, the section thickness is set to be equal by adjusting the respective modulation frequency.

**10.** Arrangement for the depth-resolved optical detection of a sample (29), comprising

> - means for linear illumination of the sample (29) with at least one wavelength,
> - means for spatially structuring the illumination light in at least one plane,
> - means for generating a relative movement between sample (29) and illumination light,
> - means for imaging the light influenced by the sample (29) onto at least one detector (15), and
> - means for calculating at least one optical section image and/or an image of increased resolution from the location information of the light influenced by the sample (29),

**characterized in that** a scanner (24) is provided in the detection beam path for discrete linewise deflection of the detection light, such that a line pattern with interspaces arises on the detector (15) even though the sample (29) is scanned sequentially, line-by-line, without interspaces and the detector (15) has more lines than are necessary for the image.

**11.** Arrangement according to Claim 10, **characterized in that** at least one scanner (9, 23) is provided as means for generating the relative movement.

12. Arrangement according to either of Claims 10 and 11, **characterized in that** an optical element (18) of structured transparency which can preferably be rotated about the optical axis (1) is provided as means for structuring the illumination.

13. Arrangement according to one of Claims 10-12, **characterized in that** gratings of varying periodicity which can be swivelled into the beam path are provided for setting various frequency structures.

14. Microscope comprising an arrangement according to one of Claims 10 to 13.

**Revendications**

1. Procédé pour la détection optique résolue en profondeur d'un échantillon (29), dans lequel un échantillon (29) ou une partie de celui-ci est exploré au moyen d'un éclairage de forme linéaire,

   - l'éclairage de l'échantillon (29) focalisé est structuré périodiquement dans au moins une direction spatiale,
   - la lumière provenant de l'échantillon (29) est détectée et des images de l'échantillon (29) sont générées,

   et au moins une image de coupe transversale optique et/ou une image de résolution plus élevée est calculée à partir des images,

   - **caractérisé en ce qu'**une déviation discrète ligne par ligne de la lumière de détection est effectuée pendant un processus de balayage sur un chemin du faisceau de détection devant le détecteur (15) dans la direction de l'exploration de l'échantillon (29) à travers une ligne de l'éclairage de forme linéaire, de manière à ce qu'un motif de lignes comportant des espaces intermédiaires soit créé sur le détecteur (15) bien que l'échantillon (29) soit soumis à un balayage séquentiel ligne par ligne sans espaces intermédiaires.

2. Procédé selon la revendication 1, dans lequel la vitesse de la déviation de la lumière de détection est supérieure à la vitesse de déplacement relatif entre l'échantillon (29) et la lumière d'éclairage.

3. Procédé selon l'une quelconque des revendications 1 ou 2, dans lequel la déviation de la lumière de détection est effectuée par pas successifs.

4. Procédé selon l'une quelconque des revendications précédentes, dans lequel, lors de la rotation de la ligne d'éclairage, la polarisation de la lumière d'éclairage est amenée à tourner en synchronisme avec la rotation.

5. Procédé selon l'une quelconque des revendications précédentes, dans lequel une occultation de la lumière est effectuée par réduction de l'intensité au moyen d'un modulateur électro-optique et/ou acousto-optique (5).

6. Procédé selon l'une quelconque des revendications précédentes, dans lequel, pour la structuration périodique de l'éclairage, un faisceau lumineux est décomposé en une pluralité de faisceaux partiels, ceux-ci étant superposés de manière interférométrique et étant mis sous la forme d'une ligne.

7. Procédé selon l'une quelconque des revendications précédentes, dans lequel la lumière résultant d'une interaction non linéaire de l'éclairage avec l'échantillon (29) ou une partie de l'échantillon (29) est détectée.

8. Procédé selon l'une quelconque des revendications précédentes, **caractérisé en ce que** l'épaisseur de la coupe optique transversale ou la résolution optique est amenée à varier en formant des structures ayant des fréquences de modulation différentes.

9. Procédé selon l'une quelconque des revendications précédentes, **caractérisé en ce que**, lors d'un éclairage à une pluralité de longueurs d'ondes, l'épaisseur de coupe transversale est réglée à une valeur égale par adaptation de la fréquence de modulation respective.

10. Dispositif pour la détection optique résolue en profondeur d'un échantillon (29), comprenant :

   - des moyens destinés à un éclairage de forme linéaire de l'échantillon (29) à au moins une longueur d'onde,
   - des moyens de structuration spatiale de la lumière d'éclairage dans au moins un plan,
   - des moyens destinés à générer un mouvement relatif entre l'échantillon (29) et la lumière d'éclairage,
   - des moyens destinés à former l'image de la lumière affectée par l'échantillon (29) sur au moins un détecteur (15), et
   - des moyens destinés à calculer au moins une image de coupe transversale optique et/ou une image de résolution plus élevée à partir de l'information de lieu de la lumière affectée par l'échantillon (29), **caractérisé en ce qu'**il est prévu un dispositif de balayage (24) sur le chemin du faisceau de détection pour la déviation discrète ligne par ligne de la lumière de détection, de manière à ce qu'un motif de lignes comportant des espaces intermédiaires soit créé sur le détecteur (15) bien que l'échantillon (29) soit soumis à un balayage séquentiel ligne par ligne sans espaces intermédiaires et que le détecteur (15) présente plus de lignes que ce qui est nécessaire pour l'image.

11. Dispositif selon la revendication 10, **caractérisé en ce qu'**il est prévu au moins un dispositif de balayage (9, 23) en tant que moyens destinés à générer le mouvement relatif.

12. Dispositif selon l'une quelconque des revendications 10 ou 11, **caractérisé en ce qu'**il est prévu, en tant que moyens destinés à structurer l'éclairage, un élément optique (18) structuré du point de vue de sa transparence, pouvant de préférence être mis en rotation autour de l'axe optique (1).

13. Dispositif selon l'une quelconque des revendications 10 à 12, **caractérisé en ce que**, pour régler différentes structures de fréquence sur le chemin de faisceau, il est prévu des réseaux insérables ayant des périodicités différentes.

14. Microscope comprenant un dispositif selon l'une quelconque des revendications 10 à 13.

Abb.1

Abb.2

Bildfeld

strukturierte Linie

Scan

t1

t2

t3

Zeiten

y

x

Bild 1

Bild 2

x

y

AOM an

AOM aus

Abb.3

Pupillenrand

$f = s/a$

$b = l/a$

Polarisationsrichtung
des Lichtes für alle
Ordnungen

-1. Ordnung       0. Ordnung       +1. Ordnung

Abb.4

Phasenlage          durch den Detektor          Phasenlage
                    bestimmtes Bildfeld

Scan                                             Scan

strukturierte Linie

(a)                                              (b)

Abb.5

Abb.6

Abb.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0353495 A2
- WO 0043819 A
- US 20070206276 A1
- WO 2007009812 A
- DE 10118463 A1
- DE 10155002 A1
- US 6028306 A
- US 6947127 B2

**In der Beschreibung aufgeführte Nicht-Patentliteratur**

- **NEIL M.A.A. ; JUSKAITIS R. ; WILSON T.** Method of obtaining optical sectioning by using structured light in a conventional microscope. *Opt.Lett.,* 1997, vol. 22 (24), 1905-1907
- **LUKOSZ W. ; MARCHAND M.** Optische Auflösung unter Überschreitung der beugungsbedingten Auflösungsgrenze. *Optica Acta,* 1963, vol. 16, 241-255
- **HEINTZMANN R. ; CREMER C.** Laterally modulated excitation microscopy: improvement of resolution by using a diffraction grating. *Proc. of SPIE,* 1998, vol. 3568, 185-196
- **NEIL M.A.A. ; JUSKAITIS, A. ; WILSON, T.** Real time 3D fluorescence microscopy by two beam interference Illumination. *Opt. Comm.,* 1998, vol. 153, 1-4
- **HEINTZMANN R. ; JOVIN T.M. ; CREMER C.** Saturated patterned excitation microscopy - a concept for optical resolution improvement. *JOSA A,* 2002, vol. 19 (8), 1599-1609
- **GUSTAFSSON, M.G.L. ; AGARD, D.A. ; SEDAT, J.W.** Doubling the lateral resolution of wide-field fluorescence microscopy by structured illumination. *Proc. of SPIE,* 2000, vol. 3919, 141-150
- **GUSTAFSSON M.G.L.** Nonlinear structured-illumination microscopy: wide-field fluorescence imaging with theoretically unlimited resolution. *PNAS,* 2005, vol. 102, 13081-13086